# FASCICULE DE BREVET EUROPEEN

(11) **EP 1 631 510 B1**
(45) Date de publication et mention de la délivrance du brevet: **16.04.2008**
(21) Numéro de dépôt: 04742759.6
(22) Date de dépôt: 17.05.2004
(51) Int. Cl.: B65D 83/16, B65D 83/22

(54) **ORGANE DE DISTRIBUTION DE PRODUIT FLUIDE**
ABGABEELEMENT FÜR EIN FLÜSSIGES PRODUKT
DISTRIBUTION ELEMENT FOR A LIQUID PRODUCT

(30) Priorité: 20.05.2003 FR 0306044
(43) Date de publication de la demande: 08.03.2006
(73) Titulaire: Valois SAS, 27110 Le Neubourg (FR)
(72) Inventeur: GARCIA, Firmin, F-27000 Evreux (FR); BERANGER, Stéphane, 27400 SURTAUVILLE (FR)
(74) Mandataire: CAPRI
(86) Numéro de dépôt international: PCT/FR2004/001211
(87) Numéro de publication internationale: WO 2004/103859

(56) Documents cités:
- FR-A- 2 131 814
- FR-A- 2 692 559
- FR-A- 2 705 947
- FR-A- 2 819 793

## Description

La présente invention concerne un organe de distribution de produit fluide, tel qu'une pompe ou une valve, généralement destiné à être monté sur une ouverture d'un récipient formant un réservoir de produit fluide. La fonction de l'organe de distribution est de prélever du produit fluide du réservoir et de le distribuer sous les formes les plus diverses (spray, filet, goutte ou noisette). Ce genre d'organe de distribution est très fréquemment utilisé dans les domaines de la parfumerie, de la cosmétique ou encore de la pharmacie. L'organe de distribution peut être actionné manuellement à l'aide d'un doigt d'une main, par exemple l'index ou le pouce, ou encore mécaniquement pour créer une distribution à cadence répétée ou rapide, (voir le document FR-A- 2 819 793).

Un tel organe de distribution comprend en général un corps et un élément d'actionnement. Le corps définit conventionnellement un fût délimitant un espace interne accessible par une entrée basse destinée à communiquer avec le réservoir de produit fluide. En partie haute, le corps forme généralement une collerette qui fait saillie radialement vers l'extérieur et qui est destinée à venir en appui sur le bord supérieur de l'ouverture, avec une interposition éventuelle d'un joint de col. L'élément d'actionnement comprend généralement une partie basse disposée à l'intérieur du corps et une partie haute qui fait saillie hors du corps. L'élément d'actionnement est déplaçable axialement en va-et-vient à l'intérieur du corps entre une position de repos et une position actionnée ou enfoncée. L'élément d'actionnement est en outre sollicité en position de repos par un ressort de rappel. L'élément d'actionnement peut comprendre une tige d'actionnement pourvue à son extrémité inférieure d'un piston, lorsque l'organe de distribution est une pompe. A son extrémité supérieure opposée, la tige d'actionnement est destinée à coopérer avec une tête de distribution qui peut éventuellement être pourvue d'un gicleur pour réaliser un spray. La tige d'actionnement définit intérieurement un canal de refoulement à travers lequel le produit fluide mis sous pression dans le corps de l'organe de distribution est refoulé vers l'orifice de distribution formé par la tête de distribution.

Avec une telle conception, l'élément d'actionnement peut se déplacer axialement en va-et-vient à l'encontre de la force exercée par le ressort de rappel à l'intérieur du corps. Toutefois, rien n'empêche l'élément d'actionnement de tourner par rapport au corps autour de l'axe de déplacement en va-et-vient. De ce fait, la position de l'orifice de distribution n'est pas fixée angulairement, ce qui peut être gênant, particulièrement lorsque le réservoir n'est pas de forme générale cylindrique circulaire.

Le but de la présente invention est de remédier à cet inconvénient de l'art antérieur précité en prévoyant des moyens de blocage pour bloquer l'élément d'actionnement en rotation par rapport au corps. Avantageusement, les moyens de blocage comprennent un élément de blocage qui agit entre l'élément d'actionnement et le corps. Selon une caractéristique intéressante, l'élément de blocage est formé ou constitué par le ressort de rappel. Avantageusement, le ressort de rappel est situé à l'extérieur du corps et entoure partiellement l'élément d'actionnement. On se sert donc du ressort de rappel pour assurer une fonction supplémentaire de blocage en rotation de l'élément d'actionnement sur le corps.

Selon une forme de réalisation pratique, la partie haute de l'élément d'actionnement comprend une tige d'actionnement surmontée d'une corolle qui fait saillie vers l'extérieur, le corps comprend une collerette qui fait saillie vers l'extérieur, le ressort de rappel prend appui d'une part sur la collerette et d'autre part sous la corolle. D'autre part, les moyens de blocage peuvent comprendre des profils de blocage en rotation qui coopèrent avec au moins une extrémité du ressort de rappel pour la maintenir en place. Ces profils de blocage peuvent être formés au niveau de la corolle et/ou de la collerette. De préférence, les profils de blocage s'étendent sur la totalité de la périphérie de la collerette ou de la corolle. Selon une forme très pratique de réalisation, les profils de blocage se présentent sous la forme d'une série de crans radiaux, les extrémités du ressort de rappel venant en prise avec ces crans radiaux, en déformant avantageusement une partie desdits crans. Le ressort de rappel qui est généralement réalisé en acier à ressort peut ainsi mordre avec ses extrémités dans les crans radiaux réalisés en matière plastique. Ceci assure un ancrage des extrémités du ressort sur le corps et l'élément d'actionnement. Toutefois, il est toujours possible d'entraîner l'élément d'actionnement en rotation par rapport au corps par un mouvement volontaire de l'utilisateur. Sans exercer de couple de rotation sur l'élément d'actionnement, celui-ci reste statique en rotation par rapport au corps, même après un nombre important d'actionnement.

Selon un autre aspect de l'invention, le corps comprend une douille de guidage dans laquelle coulisse l'élément d'actionnement, le ressort de rappel étant engagé et guidé autour de ladite douille.

L'invention sera maintenant plus amplement décrite en référence aux dessins joints donnant à titre d'exemple non limitatif un mode de réalisation de l'invention.

Sur les figures :
- la figure 1 est une vue latérale d'un organe de distribution de produit fluide selon l'invention,

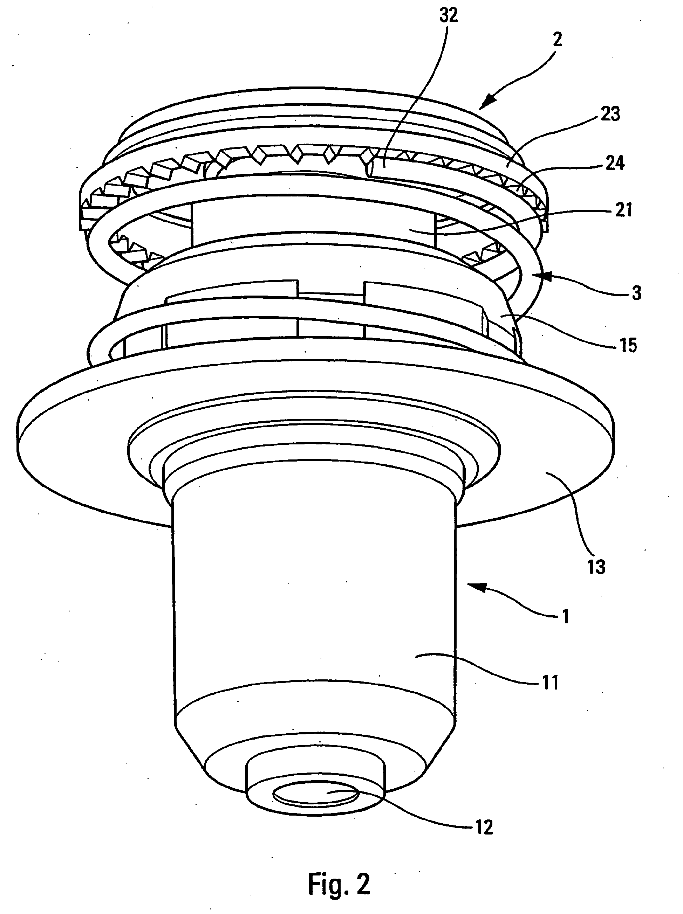

- la figure 2 est une vue légèrement de dessous de l'organe de distribution de la figure 1,
- la figure 3 est une vue légèrement de dessus de l'organe de distribution des figures précédentes,
- la figure 4 est une vue très largement agrandie, légèrement de dessous, d'un détail de l'organe de distribution des figures précédentes, et
- la figure 5 est une vue très largement agrandie, légèrement de dessus, de l'organe de distribution des figures précédentes.

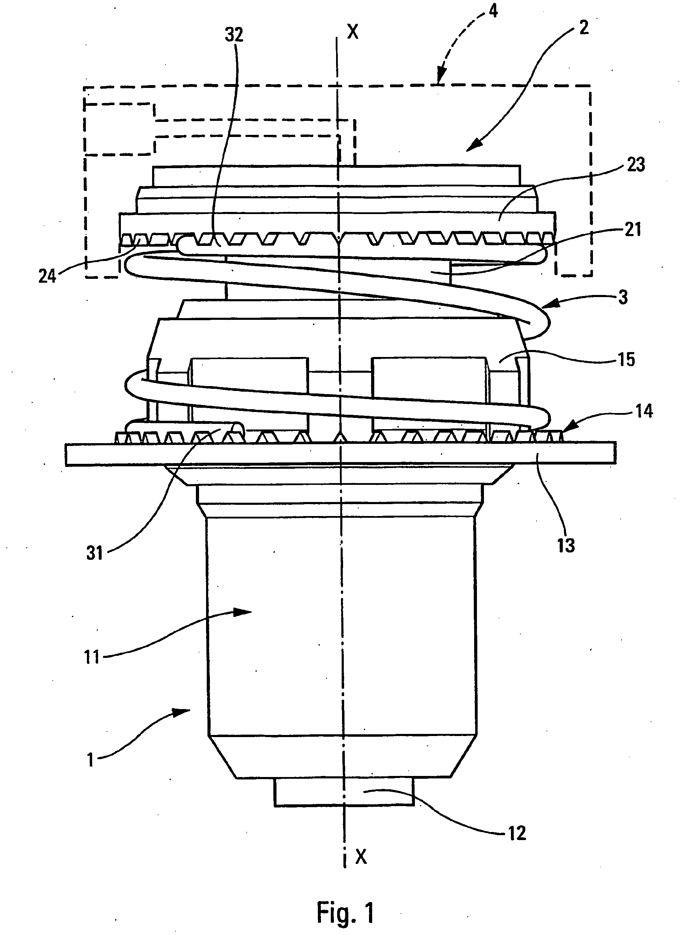

L'organe de distribution de produit fluide de l'invention peut être une pompe ou une valve. Il comprend un corps 1 et un élément d'actionnement 2. L'élément d'actionnement 2 peut être pourvu d'une tête de distribution 4, ou en variante, l'élément d'actionnement 2 peut intégrer une tête de distribution 4. La tête de distribution a été représentée en pointillés sur la figure 1. Cette tête 4 comprend un canal de sortie dont l'extrémité forme un orifice de distribution adapté à réaliser un spray, un filet ou une goutte.

Le corps 1 comprend un fût 11 présentant une entrée inférieure 12 destinée à être alimentée en produit fluide, par exemple stocké dans un réservoir. Au-dessus du fût 11, le corps 1 forme une collerette d'appui 13 destinée à venir en appui sur le bord supérieur d'une ouverture du réservoir contenant le produit fluide. Un joint peut éventuellement être interposé entre la collerette 13 et le bord supérieur de l'ouverture. Un organe de fixation peut être utilisé pour fixer la collerette sur le réservoir. Au-dessus de la collerette 13, le corps forme une douille de guidage 15. Le bord supérieur de la douille de guidage 15 définit une ouverture donnant à l'intérieur du corps et plus particulièrement du fût 11.

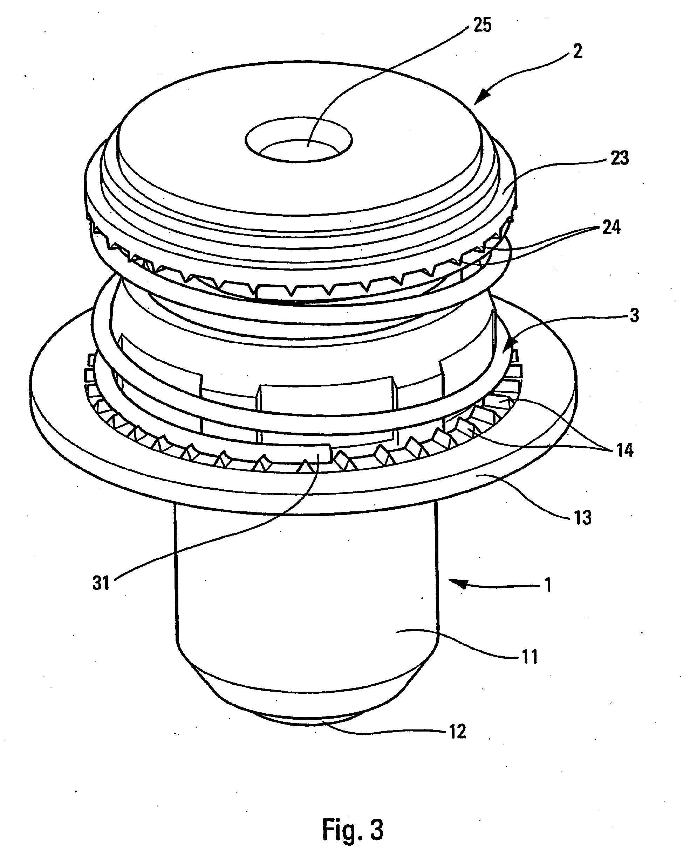

L'élément d'actionnement 2 comprend une partie basse (non visible) qui s'étend à l'intérieur du corps 1 jusqu'au niveau du fût 11. Cette partie basse peut comprendre un piston destiné à coulisser de manière étanche à l'intérieur du fût 11, lorsque l'organe de distribution est une pompe. La partie basse peut former une partie d'un clapet d'admission lorsque l'organe de distribution est une valve. L'élément d'actionnement 2 comprend également une partie haute qui s'étend hors du corps 1. Plus précisément, la partie haute fait saillie vers le haut hors de l'ouverture formée par le bord supérieur de la douille de guidage 15. La partie haute comprend une tige d'actionnement 21 qui pénètre à l'intérieur du corps 1. La tige d'actionnement 21 s'étend à l'intérieur de la douille de guidage 15. Au-dessus de la tige d'actionnement 21, l'élément d'actionnement forme une corolle 23 qui présente un diamètre supérieur à celui de la tige 21. De ce fait, la périphérie externe de la corolle 23 fait saillie radialement vers l'extérieur par rapport à la tige 21. La corolle 23 coopère avec la tête de distribution 4. On peut également dire que la corolle 23 forme une partie de la tête de distribution 4. Conventionnellement, l'extrémité supérieure de la tige d'actionnement 21 est libre, et la tête de distribution 4 est montée par encliquetage ou serrage sur l'extrémité supérieure libre de la tige d'actionnement. Dans l'exemple représenté sur les figures, l'extrémité supérieure de la tige d'actionnement 21 se prolonge pour former la corolle 23. Comme on peut le voir sur la figure 3, la tige d'actionnement 21 ainsi que la corolle 23 sont traversées par un conduit interne de refoulement 25 qui débouche au niveau de la paroi supérieure de la corolle 23. Ce conduit de refoulement s'étend jusqu'à l'intérieur du corps 1, et plus particulièrement du fût 11. Ce conduit de refoulement est destiné à l'écoulement du produit fluide mis sous pression à l'intérieur du corps 1.

Comme dans tout organe de distribution conventionnel, l'élément d'actionnement 2 est déplaçable axialement en va-et-vient à l'intérieur du corps 1. L'axe de déplacement XX visible sur la figure 1 constitue également un axe de révolution pour le corps et l'élément d'actionnement 2. L'élément d'actionnement 2 est ainsi déplaçable axialement en va-et-vient entre une position de repos et une position enfoncée ou actionnée. Sur les différentes figures, l'élément d'actionnement 2 est en position de repos. Le déplacement de l'élément d'actionnement 2 a pour fonction de diminuer le volume utile d'une chambre à l'intérieur du corps 1 de manière à mettre une dose de produit fluide sous pression. Dans le cas d'une valve, l'enfoncement de l'élément d'actionnement 2 dans le corps 1 a pour effet d'ouvrir la valve d'admission de manière à permettre un échappement du produit fluide, éventuellement stocké sous pression à l'intérieur du réservoir de produit fluide. La fonction de l'élément d'actionnement 2 n'est pas critique pour la présente invention, dès lors que cet élément d'actionnement se déplace axialement en va-et-vient dans le corps 1.

L'organe de distribution de produit fluide de l'invention comprend également un ressort de rappel 3 qui sollicite l'élément d'actionnement 2 en position de repos. En d'autres termes, le ressort de rappel 3 a tendance à éloigner la collerette de la corolle 23. Ainsi, pour enfoncer l'élément d'actionnement 2 dans le corps 1, il est nécessaire de surmonter la force exercée par le ressort de rappel 3. Selon l'invention, ce ressort de rappel 3 est disposé à l'extérieur du corps 1 et de l'élément d'actionnement 2. Le ressort 3 s'étend autour de la tige d'actionnement 21 et autour de la douille de guidage 15. D'ailleurs, cette douille 15 a également pour fonction de maintenir le ressort 3 de manière parfaitement centrée sur l'axe de déplacement XX.

Le ressort de rappel 3 comprend deux extrémités 31 et 32 qui viennent respectivement en appui sur la collerette et sous la corolle 23. Ces extrémités 31 et 32 sont selon l'invention avantageusement maintenues de manière statique par rapport à la collerette 13 et la corolle 23. Ainsi, le ressort de rappel 3 sert d'élément de blocage en rotation permettant d'empêcher une rotation de l'élément d'actionnement 2 par rapport au corps 1. De cette manière, l'orifice de distribution formé par la tête d'actionnement présente une orientation angulaire fixe déterminée. Le maintien en place des extrémités 31 et 32 du ressort 3 par rapport à la collerette 13 et à la corolle 23 n'a pas besoin d'être définitif, de sorte que l'élément d'actionnement 2 peut être entraîné en rotation par rapport au corps 1, lorsque l'utilisateur le souhaite, en maintenant par exemple fixement le corps 1 et en exerçant une force rotative sur l'élément d'actionnement 2. En tout cas, il est avantageux que l'élément d'actionnement 2 reste fixe en rotation par rapport au corps 1 lorsque l'élément d'actionnement 2 est déplacé axialement en va-et-vient le long de l'axe XX pour actionner l'organe de distribution. Ainsi, l'orifice de distribution reste angulairement statique même après un nombre important d'actionnement de l'organe de distribution.

On peut imaginer ou prévoir tous moyens permettant de garantir un maintien statique des extrémités 31 et 32 du ressort 3, au moins pendant les phases d'actionnement de l'organe de distribution. Les extrémités du ressort pourraient par exemple être coudées et pénétrer dans des logements correspondants formés respectivement dans la collerette 13 et la corolle 23. Des techniques de collage ou d'encliquetage sont également envisageables.

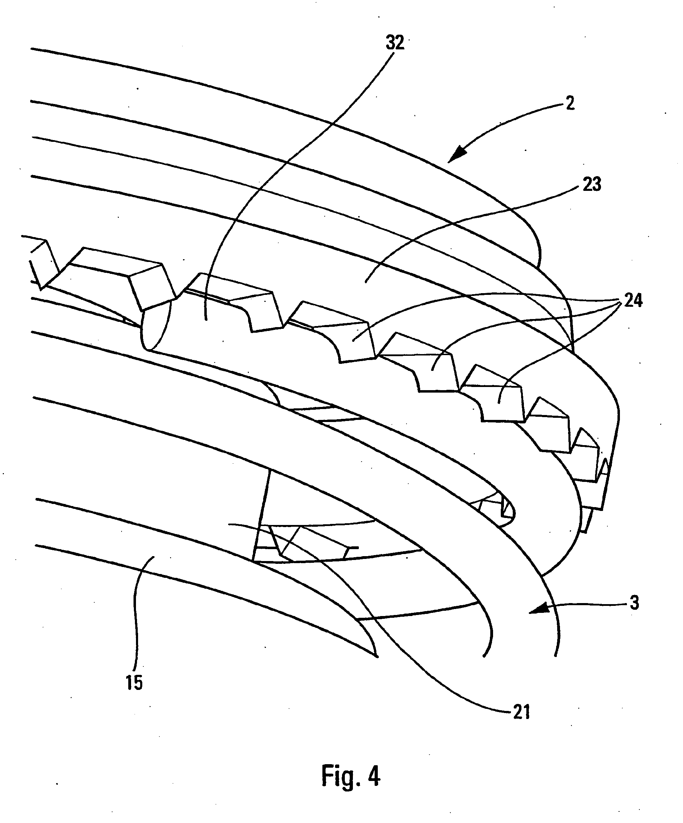

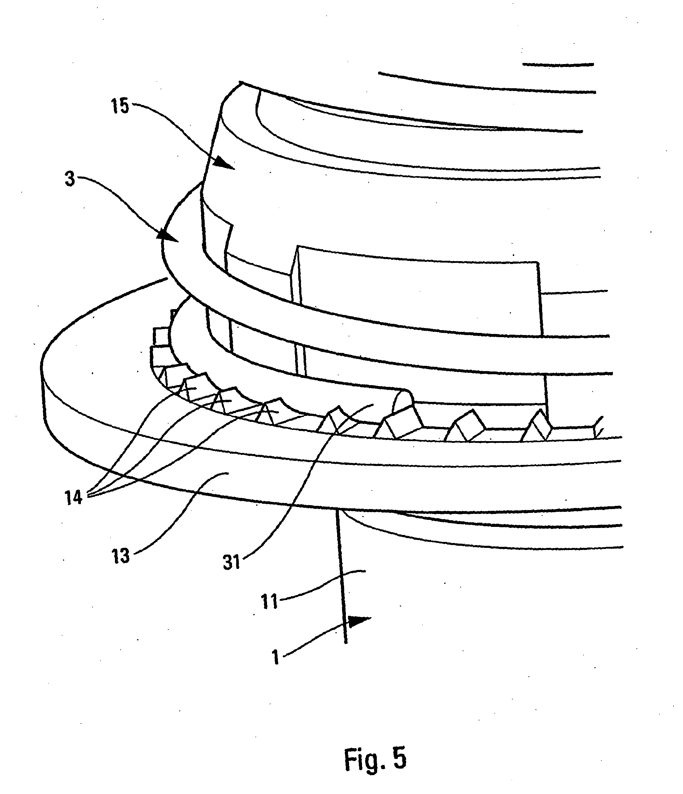

Dans le mode de réalisation utilisé pour illustrer la présente invention, les moyens de blocage, outre le ressort de rappel 3, comprennent également des profils de blocage réalisés de préférence au niveau de la face supérieure de la collerette 13 et/ou de la face inférieure de la corolle 23. Les profils de blocage de la collerette 13 sont désignés par la référence numérique 14, et les profils de blocage de la corolle 23 sont désignés par la référence numérique 24. Les profils de blocage 14 et 24 peuvent être avantageusement identiques. Ils peuvent cependant être différents. Ces profils de blocage se présentent sous la forme d'une série circulaire de crans radiaux espacés les uns des autres. Ils peuvent s'étendre sur tout ou partie de la périphérie de la collerette et/ou de la corolle. Les crans 14 présentent des arêtes pointant vers le haut, alors que les crans 24 présentent des arêtes orientées vers le bas. Les bouts respectifs des extrémités 31 et 32 du ressort 3 viennent avantageusement en butée contre un cran comme on peut le voir plus clairement sur les figures 4 et 5. Il peut également être envisagé que les extrémités du ressort déforment plastiquement les crans 14 et 24, comme on peut le voir sur les figures 4 et 5. La déformation des crans, associée à la mise en butée des bouts du ressort assurent un maintien statique des extrémités 31 et 32 du ressort sur la collerette 13 et sous la corolle 23, et ceci au moins pendant les phases d'actionnement de l'organe de distribution. En revanche, on comprend aisément qu'il est tout de même possible de faire tourner l'élément d'actionnement 2 par rapport au corps 1 en exerçant une force rotative sur l'élément d'actionnement 2 dans le sens des aiguilles d'une montre. Bien entendu le sens de rotation de l'élément d'actionnement 2 est directement imposé par le pas à droite ou à gauche du ressort de rappel 3.

Grâce à l'invention, on peut déterminer et imposer l'orientation de l'élément d'actionnement par rapport au corps 1 au moins pendant les périodes d'actionnement de l'organe de distribution, et ceci avantageusement à l'aide du ressort de rappel qui sert d'élément de blocage en rotation.

## Revendications

1. Organe de distribution de produit fluide comprenant un corps (1), un élément d'actionnement (2) et un ressort de rappel (3), ledit élément d'actionnement comprenant une partie disposée à l'intérieur du corps et une partie haute (21, 23) qui fait saillies hors du corps, ledit élément d'actionnement étant déplaçable axialement en va-et-vient à l'intérieur dudit corps entre une position de repos et une position enfoncée, ledit élément d'actionnement étant sollicité en position de repos par le ressort de rappel (3), **caractérisé en ce qu'**il comprend des moyens de blocage (14, 24, 3) pour bloquer l'élément d'actionnement (2) en rotation par rapport audit corps (1).

2. Organe de distribution selon la revendication 1, dans lequel les moyens de blocage comprennent un élément de blocage (3) qui agit entre l'élément d'actionnement (2) et le corps (1).

3. Organe de distribution selon la revendication 2, dans lequel l'élément de blocage est formé par le ressort de rappel (3).

4. Organe de distribution selon l'une quelconque des revendications précédentes, dans lequel le ressort de rappel (3) est situé à l'extérieur du corps (1) et entoure partiellement l'élément d'actionnement (2).

5. Organe de distribution selon l'une quelconque des revendications précédentes, dans lequel la partie haute de l'élément d'actionnement comprend une tige d'actionnement (21) surmontée d'une corolle (23) qui fait saillie vers l'extérieur, le corps comprend une collerette (13) qui fait saillie vers l'extérieur, le ressort de rappel (3) prend appui d'une part sur la collerette (13) et d'autre part sous la corolle (23).

6. Organe de distribution selon la revendication 3, dans lequel les moyens de blocage comprennent des profils de blocage en rotation (14, 24) qui coopèrent avec au moins une extrémité (31, 32) du ressort de rappel (3) pour la maintenir en place.

7. Organe de distribution selon les revendications 5 et 6, dans lequel au moins une parmi la corolle (23) et la collerette (13) est pourvue de profils de blocage (14, 24).

8. Organe de distribution selon la revendication 6 ou 7, dans lequel les profils de blocage (14, 24) s'étendent sur la totalité de la périphérie de la collerette (13) ou de la corolle (23).

9. Organe de distribution selon la revendication 6, 7 ou 8, dans lequel les profils de blocage se présentent sous la forme d'une série de crans radiaux (14, 24), les extrémités (31, 32) du ressort de rappel (3) venant en prise avec ces crans radiaux, en déformant avantageusement une partie desdits crans.

10. Organe de distribution selon la revendication 5, dans lequel le corps (1) comprend une douille de guidage (15) dans laquelle coulisse l'élément d'actionnement (2), le ressort de rappel (3) étant engagé et guidé autour de ladite douille (15).

## Claims

1. A fluid dispenser member comprising a body (1), an actuator element (2), and a return spring (3), said actuator element comprising a portion disposed inside the body and a top portion (21, 23) that projects out from the body, said actuator element being axially displaceable, downwards and upwards, inside said body between a rest position and a depressed position, said actuator element being urged towards the rest position by the return spring (3), the dispenser member being **characterized in that** it further comprises blocking means (14, 24, 3) for preventing the actuator element (2) from turning relative to said body (1).

2. A dispenser member according to claim 1, in which the blocking means include a blocking element (3) that acts between the actuator element (2) and the body (1).

3. A dispenser member according to claim 2, in which the blocking element is formed by the return spring (3).

4. A dispenser member according to any preceding claim, in which the return spring (3) is situated outside the body (1) and surrounds at least part of the actuator element (2).

5. A dispenser member according to any preceding claim, in which the top portion of the actuator element includes an actuator rod (21) surmounted by an annulus (23) that projects outwards, the body includes a collar (13) that projects outwards, the return spring (3) bears firstly on the collar (13) and secondly under the annulus (23).

6. A dispenser member according to claim 3, in which the blocking means comprise blocking profiles (14, 24) that prevent turning and that co-operate with at least one end (31, 32) of the return spring (3) so as to hold it in place.

7. A dispenser member according to claims 5 and 6, in which at least one of the annulus (23) and the collar (13) is provided with blocking profiles (14, 24).

8. A dispenser member according to claim 6 or claim 7, in which the blocking profiles (14, 24) extend over the entire periphery of the collar (13) or of the annulus (23).

9. A dispenser member according to claim 6, 7, or 8, in which the blocking profiles are in the form of a series of radial notches (14, 24), the ends (31, 32) of the return spring (3) becoming engaged with the radial notches by advantageously deforming a fraction of said notches.

10. A dispenser member according to claim 5, in which the body (1) includes a guide bushing (15) in which the actuator element (2) slides, the return spring (3) being engaged and guided around said bushing (15).

## Patentansprüche

1. Ausgabeeinrichtung für ein flüssiges Produkt, aufweisend ein Gehäuse (1), ein Betätigungselement (2) und eine Spannfeder (3), wobei das Betätigungselement einen Teil, der im Inneren des Gehäuses angeordnet ist, und einen oberen Teil (21, 23), der außerhalb des Gehäuses vorsteht, aufweist, wobei das Betätigungselement im Inneren des Gehäuses zwischen einer Ruhestellung und einer Schaltstellung axial hin- und her verschiebbar ist, wobei das Betätigungselement in der Ruhestellung durch die Spannfeder (3) belastet ist, **dadurch gekennzeichnet, dass** sie Sperrmittel (14, 24, 3) zum Sperren des Betätigungselements (2) in Drehkopplung in Bezug auf das Gehäuse (1) aufweist.

2. Ausgabeeinrichtung nach Anspruch 1, wobei die Sperrmittel ein Sperrelement (3) aufweisen, das zwischen dem Betätigungselement (2) und dem Gehäuse (1) wirkt.

3. Ausgabeeinrichtung nach Anspruch 2, wobei das Sperrelement durch die Spannfeder (3) gebildet ist.

4. Ausgabeeinrichtung nach einem der vorhergehenden Ansprüche, wobei sich die Spannfeder (3) außerhalb des Gehäuses (1) befindet und das Betätigungselement (2) teilweise umgibt.

5. Ausgabeeinrichtung nach einem der vorhergehenden Ansprüche, wobei der obere Teil des Betätigungselements eine Betätigungsstange (21) aufweist, auf der eine Krone (23) angebracht ist, die nach außen vorsteht, wobei das Gehäuse einen Kragen (13) aufweist, der nach außen vorsteht, wobei sich die Spannfeder (3) einerseits auf dem Kragen (13) und andererseits unter der Krone (23) abstützt.

6. Ausgabeeinrichtung nach Anspruch 3, wobei die Sperrmittel Drehkopplungsprofile (14, 24) aufweisen, die mit mindestens einem Ende (31, 32) der Spannfeder (3) zusammenwirken, um diese an ihrem Platz zu halten.

7. Ausgabeeinrichtung nach einem der Ansprüche 5 und 6, wobei mindestens ein Teil von Krone (23) und Kragen (13) mit Sperrprofilen (14, 24) versehen ist.

8. Ausgabeeinrichtung nach Anspruch 6 oder 7, wobei sich die Sperrprofile (14, 24) über den gesamten Umfang des Kragens (13) oder der Krone (23) erstrecken.

9. Ausgabeeinrichtung nach Anspruch 6, 7 oder 8, wobei die Sperrprofile in Form einer Reihe von radialen Einkerbungen (14, 24) vorliegen, wobei die Enden (31, 32) der Spannfeder (3) mit den radialen Einkerbungen in Eingriff kommen und dabei einen Teil der Einkerbungen vorteilhafterweise verformen.

10. Ausgabeeinrichtung nach Anspruch 5, wobei das Gehäuse (1) eine Führungsbuchse (15) aufweist, in der das Betätigungselement (2) gleitet, wobei die Spannfeder (3) um die Buchse (15) im Eingriff ist und von dieser geführt wird.
